# EUROPEAN PATENT APPLICATION

(11) **EP 4 528 029 A1**
(43) Date of publication of application: **26.03.2025**
(21) Application number: 23199165.4
(22) Date of filing: 22.09.2023
(51) Int. Cl.: E01C 13/02, E01C 13/08, B29B 17/00, B29B 17/04

(54) **METHOD FOR MANUFACTURING AN ELASTIC LAYER**

(60) Divisional application: 24189211.6
(71) Applicant: FormaTurf GmbH, 45356 Essen (DE)
(72) Inventor: SICK, Stephan, 76532 Baden-Baden (DE); GROCHLA, Dario, 44869 Bochum (DE); HAMANN, Sven, 45472 Mühlheim (DE)
(74) Representative: Richardt Patentanwälte PartG mbB

(57) **Abstract**

A method for manufacturing an elastic layer on site provides for downsizing an aged artificial turf into artificial turf fragments, processing the artificial turf fragments for generating a plastic melt, after the plastic melt solidifies, downsizing the solidified plastic melt into plastic particles, mixing the plastic particles with a binding agent for forming a fluid elastic composite, and applying the fluid elastic composite on a substrate at the site for forming the elastic layer.

## Description

### FIELD OF THE INVENTION

Certain embodiments of the invention relate to the field of elastic composites, such as elastic layers and methods of manufacture. More specifically, certain embodiments of the invention relate to methods of manufacturing an elastic layer on site, methods of manufacturing an artificial turf system on site, and the systems therefrom.

### BACKGROUND OF THE INVENTION

Artificial turf or artificial grass is a surface that is made up of fibers which is used to replace natural grass. The artificial turf is designed such that it has an appearance which resembles natural grass. Typically, artificial turf is used as a surface for sports such as soccer, American football, rugby, tennis, golf, for playing fields, or exercise fields. Furthermore, artificial turf is frequently used for landscaping applications. An advantage of using artificial turf is that it eliminates the need to care for a grass playing or landscaping surface, like regular mowing, scarifying, fertilizing and watering. For example, watering can be difficult due to regional restrictions for water usage. In other climatic zones the re-growing of grass and re-formation of a closed grass cover is slow compared to the rate of damaging the natural grass surface by playing and/or exercising on the field. Although artificial turf fields do not require similar attention and effort to be maintained, they typically exhibit wear after a usage time of 5-15 years. Mechanical damage from use and exposure to UV radiation, thermal cycling, interactions with chemicals and various environmental conditions generate wear on artificial turf. It is therefore economically and environmentally beneficial to utilize aged artificial turfs in manufacturing components to be used in conjunction with new artificial turfs or other sports fields or surfaces.

US20130280445 A1 describes a system and method for recycling and repurposing a synthetic turf field cover including a pre-existing mixture of rubber and sand particles embedded in the turf material, and US2021/0189663 A1 describes a method for manufacturing an artificial turf system using a mixture of pre-existing infill and a binding agent.

### BRIEF SUMMARY OF THE INVENTION

Various embodiments provide a method for manufacturing an elastic layer on site, manufacturing an artificial turf system on site, and an artificial turf system, as described by the subject matter of the independent claims. Advantageous embodiments are described in the dependent claims. Embodiments of the present invention can be freely combined with each other if they are not mutually exclusive.

In one aspect, the invention relates to a method for manufacturing an elastic layer on site, including downsizing an aged artificial turf into artificial turf fragments, processing the artificial turf fragments for generating a plastic melt, and after the plastic melt solidifies, downsizing the solidified plastic melt into plastic particles, mixing the plastic particles with a binding agent for forming a fluid elastic composite, and applying the fluid elastic composite on a substrate at the site for forming the elastic layer.

Advantageously, manufacturing an elastic layer on site, also referred to as "in situ," reduces costs and logistics of transporting all components for manufacturing an elastic composite to the site, as well as eliminating the technical considerations of keeping a fluid elastic composite from partially or totally solidifying before applying the composite to the substrate, particularly when the composite is prepared off-site. Furthermore, by generating the plastic melt from artificial turf fragments provided by downsizing aged artificial turfs, and mixing the plastic particles formed from the plastic melt with a binding agent for forming the fluid elastic composite, aged artificial turf (and particular, infill contaminated by microplastics, which result from usage of the artificial turf over its lifetime, as well as exposure of the turf to chemicals (e.g., air pollution contaminants and/or cleaning chemicals) and the environment (e.g., sunlight, oxidation, freeze-thaw cycles)) can be recycled instead of being deposited in landfills. In addition, forming new elastic layers from one or more components of aged artificial turfs, which then serve as stable platforms upon which new artificial turfs can be laid, reduces the costs of installing new artificial turfs.

In one embodiment, the artificial turf fragments include two or more plastic components, at least two of the two or more plastic components include thermoplastic components, and the plastic melt includes a moldable mixture of the thermoplastic components.

Advantageously, forming a moldable mixture of the thermoplastic components eliminates any aggregation (i.e., clumping) of the thermoplastic components, thereby resulting in a more homogeneous plastic melt and thus a more homogeneous elastic layer that has more spatially-uniform elastic properties.

In another embodiment, the artificial turf fragments are processed by rotationally mixing and transporting the artificial turf fragments for generating the plastic melt.

In yet another embodiment, rotationally mixing and transporting the artificial turf fragments further includes rotationally mixing and transporting the artificial turf fragments at a pressure less than a maximum predefined pressure for generating the plastic melt. In another embodiment, the maximum predefined pressure is between about 0.1 - 20 bar.

Advantageously, rotationally mixing and transporting the artificial turf fragments at a pressure less than a maximum predefined pressure enables the artificial turf fragments (or a mixture containing the artificial turf fragments) to contain large weight percentages of infill, particularly mineral infill such as sand, for at least the reason that pressures below a predefined maximum pressure may reduce the abrasive action of the mineral infill on the machinery or components of machinery that perform the mixing, thereby reducing the cost and technical considerations in separating large fractions of the infill from aged artificial turfs and/or from artificial turf fragments generated from aged artificial turfs. Furthermore, these features may have the advantage of reducing the cost, complexity, and maintenance of a rotationally mix/transport system by lowering the larger pressures typically required for conventional extrusion processes.

In another embodiment, rotationally mixing and transporting the artificial turf fragments at a pressure less than the maximum predefined pressure further includes rotationally mixing and transporting the artificial turf fragments at a predefined temperature, where the predefined temperature is based upon at least one melt temperature of the two or more thermoplastic components.

Advantageously, rotationally mixing and transporting the artificial turf fragments at a pressure less than the maximum predefined pressure and at a predefined temperature, where the predefined temperature is based upon at least one melt temperature of the two or more thermoplastic components, ensures control over both pressure and temperature, thereby further ensuring that the plastic melt is a moldable mixture of the thermoplastic components.

In a further embodiment, rotationally mixing and transporting the artificial turf fragments includes rotationally mixing and transporting the artificial turf fragments in a chamber, where the chamber has a proximate end, a distal end, at least one input port positioned at the proximate end for receiving the artificial turf fragments, and at least one output port positioned at the distal end through which the plastic melt flows, and where transporting further includes translationally transporting the artificial turf fragments toward the distal end of the chamber.

These features may have the advantage of transporting (i.e., providing translational motion to) the fragments or material mixture, while being mixed in a rotational sense, from the proximate end toward the distal end, thereby using the mixing process to both rotationally mix and translationally move the mixture toward the output, during which a melt is formed from the fragments or the material mixture.

In one embodiment, the chamber is configured such that the pressure in the chamber is created solely by translationally transporting the artificial turf fragments in the chamber.

Creating a pressure from a source internal to the chamber has the advantage of reducing the technical complexity and cost of conventional systems that require external pressure sources to create pressures to assist in generating a melt and/or in transporting the material through the system from input to output.

In an additional embodiment, the aged artificial turf includes infill, and the infill is separated from the aged artificial turf before the aged artificial turf is downsized.

These features have the advantage of reusing the mineral infill by adding the mineral infill to the turf fragments, and which has the additional benefits of reducing adhesion of the material mixture, which is composed of the fragments being rotationally mixed and transported, from surfaces of a chamber of a melt system, assisting material flow through the melt system, providing flame retardant properties and/or providing specific physical properties to the elastic layer produced, in part, from the melt, such as static/dynamic frictional properties, strength, etc.

In other embodiments, the artificial turf fragments are premixed with a first fraction of the separated infill and optionally with a first portion of aged artificial turf fibers for forming a mixture, and where rotationally mixing and transporting the artificial turf fragments includes rotationally mixing and transporting the mixture for generating the plastic melt, and/or adding a second fraction of the separated infill and optionally a second portion of the aged artificial turf fibers to the mixing of the plastic particles with the binding agent for forming the fluid elastic composite.

In another embodiment, the mixture includes up to 85 wt. % of the first fraction of the separated infill, and in a further embodiment, the first and second fractions of the separated infill include at least one of a mineral infill and an elastomeric infill.

In one embodiment, the first and second fractions of the separated infill include sand and optionally an elastomeric infill, and the mixture includes up to 80 wt. % of the sand of the first fraction of the separated infill.

In another embodiment, the first and second fraction of the separated infill include sand, the first and second fraction of the sand in combination represent approximately 100% of the sand in the separated infill, and the sand is contaminated by adhering microplastics resulting from usage of the aged artificial turf including the sand infill.

These features have the advantage of controlling the exact proportions of separated infill (e.g., sand) and/or aged artificial turf fibers added to, and premixed with, the artificial turf fragments for controlling the composition of the mixture and/or of controlling the exact proportions of separated infill (e.g., sand) and/or aged artificial turf fibers added to, and mixed with, the plastic particles and binding agent for controlling the composition of the fluid elastic composite, as well as assisting in, and better controlling the generation of, the plastic melt by reducing or eliminating adhesion of the fragments or material mixture to surfaces of the processing system that come into contact with the fragments or mixture and/or facilitating the flow of the fragments or material mixture through the melt system from input to output and/or providing an elastic layer, produced in part from plastic particles generated from the solidified melt, that has specifically designed physical properties or characteristics, such degree of abrasiveness, strength, and surfaces with predetermined static/dynamic frictional properties, among others.

In yet another embodiment, the aged artificial turf includes infill, the plastic melt (generated from rotationally mixing and transporting the artificial turf fragments) includes the infill, and the infill includes at least one of a mineral infill and an elastomeric infill.

These features advantageously enable downsizing an aged artificial turf, which contains preexisting infill, into artificial turf fragments, thereby eliminating the timeconsuming and technically more complex step of separating infill from aged artificial turfs before downsizing, as well as providing a simple means of recycling all of the preexisting infill, which may be contaminated with microplastics, for forming a new elastic layer.

In another embodiment, the artificial turf fragments are premixed with a first portion of aged artificial turf fibers for forming a mixture, and the mixture is rotationally mixed and transported for generating the plastic melt, and/or a second portion of the aged artificial turf fibers are mixed with the plastic particles and the binding agent for forming the fluid elastic composite.

These features advantageously provide for recycling aged artificial turf fibers, in contrast to depositing the fibers in a landfill, as well as facilitating the rotational mixing and transporting of the artificial turf fragments and/or the infill of the mixture without the components of the mixture adhering to surfaces of the processing system, mitigating aggregation of components of the mixture, and further reducing the abrasive nature of the mineral components of the mixture on mixing surfaces, blades, etc. by adding a lubricating function to the mixture.

In other embodiments, applying the fluid elastic composite on the substrate at the site includes pouring or spraying the fluid elastic composite on the substrate at the site for forming the elastic layer.

These features facilitate easy application of the fluid composite, and also ensure better coverage of the fluid composite on the substrate. Spaying a fluid elastic composite on the substrate advantageously enables full coverage of the substrate (i.e., of a surface of the substrate), including complete leveling out and coverage of any surface irregularities and any cracks, and pouring the fluid composite on the substrate enables full coverage of the substrate, including complete leveling out and coverage of any surface irregularities and any cracks, while also reducing the costs and any technical complexities associated with spraying (e.g., use of special equipment, such as spray nozzles, pressurized systems, as well as environmental considerations (e.g., windy conditions)).

In another embodiment, the fragments of the aged artificial turf include one or more of: aged artificial turf fibers, downsized portions of artificial turf carrier layers, downsized portions of artificial turf backing layers and downsized portions of artificial turf elastic layers. In yet a further embodiment, the aged artificial turf fibers are generated by mowing the aged artificial turf, thereby advantageously providing fragments of the aged fibers by using conventional mowing or cutting implements or machines, while also reducing the weight, and thus the cost, of transporting aged artificial turf (removed from a site) to a processing center. Furthermore, providing artificial turf fibers by mowing the aged artificial turf reduces the technical complexity, cost and processing time otherwise needed to separate out the artificial turf fibers from the aged artificial turf, given that most fibers are firmly embedded in a carrier layer (and optionally a backing layer and optionally an aged elastic layer) via polymerized components and/or by the tufting or weaving of the fibers in the carrier layer and optionally in the backing layer.

In another embodiment, the substrate includes one of: soil, rock, gravel and cement, or in other embodiments, any stable platform, such as a preexisting (i.e., aged) elastic layer, located at a site from which an associated aged artificial turf was removed. Rock may be naturally occurring rock, either originally in place at the site, or transported and laid at the site. Gravel consists of particulates of crushed or ground rock, as known to those of skill in the art. Alternatively, the substrate may include two or more of soil, rock, gravel and cement layers, where the layers are vertically stacked one upon the other. Soil may be any earthen material that naturally occurs on site, or may be transported from other sites. For the purposes of the present disclosure, and as known to those of skill in the art, soil is defined to be a layer or a vertical sequence of layers produced by the combined actions of percolating waters and living organisms.

According to another aspect, the invention relates to an artificial turf system, including an elastic layer manufactured according to any one the above-described embodiments, and an artificial turf positioned directly on the elastic layer.

According to yet another aspect, the invention relates to a method of manufacturing an artificial turf system on site, including manufacturing an elastic layer according to any one of the above described embodiments, where the fluid elastic composite on the substrate solidifies into the elastic layer, and before the fluid elastic composite solidifies, positioning an artificial turf directly on the fluid elastic composite.

### BRIEF DESCRIPTION OF SEVERAL VIEWS OF THE DRAWINGS

The following embodiments of the invention are explained in greater detail, by way of example only, making reference to the drawings in which:
Fig. 1 illustrates a method of manufacturing an elastic layer on site, according to an embodiment of the present invention;
Fig. 2 is a schematic diagram of an artificial turf melt system for forming the plastic melt of the method of Fig. 1, according to an embodiment of the present invention;
Fig. 3 is a schematic diagram of a longitudinal cross section of a portion of the chamber of Fig. 2, according to an embodiment of the present invention;
Fig. 4 is a schematic of a portion of the chamber of Fig. 2 illustrating the distance d_{w} between an outer paddle edge and the inside surface of the chamber wall, according to an embodiment of the present invention;
Fig. 5 is a schematic of a primary mixer, according to an embodiment of the present disclosure.
Fig. 6 is a cross-section of a substrate and overlaying elastic layer, according to an embodiment of the present invention; and
Fig. 7 is a cross section of an artificial turf system, according to an embodiment of the present invention.

### DETAILED DESCRIPTION OF THE INVENTION

Embodiments of the invention may have the advantage that existing, worn-out artificial turf can be reused, at least partially, for providing a new elastic layer, which can further be used in conjunction with a new artificial turf or with new surfaces, such as types of floorings or track surfaces, for example. The amount of waste generated upon replacing worn-out artificial turf with a new turf or new surface may be reduced. Furthermore, costs of the new artificial turf may be reduced, because downsized portions of aged artificial turfs, in optional combination with separated infill and/or aged artificial turf fibers, are used to provide a new elastic layer. Thus, components needed for manufacturing a new elastic layer, such as rubber granules, need not be newly manufactured and purchased in order to provide a flooring, a turf, or other surface with a defined minimum elasticity. That is, fragments of aged artificial turf in optional combination with separated infill and/or aged artificial turf fibers are reused for generating an elastic layer that can used as a basis for the new artificial turf, or as a basis for other structures, such as stable platforms underlying athletic tracks or flooring for animal stalls, etc. Moreover, the elastic layer (also referred to as the elastic binding composite layer) may have the advantage that the elastic binding composite (EBC) layer may homogeneously distribute mechanical forces imposed by, e.g., a ball, or players of a soccer or rugby game, or players running indoor or outdoor track events. Thus, the rigidity of the EBC layer may ensure that the players are tiring less quickly.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

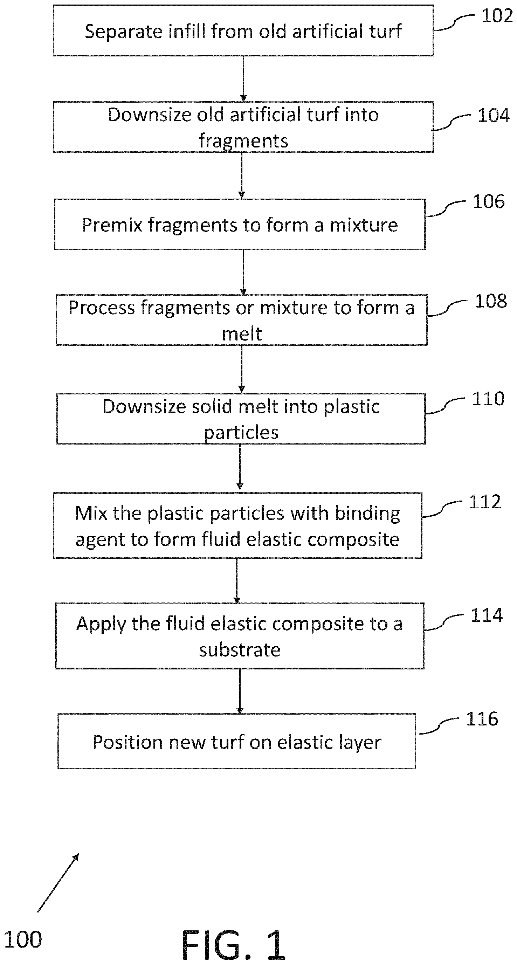

Fig. 1 illustrates a method 100 of manufacturing an elastic layer on site, according to an embodiment of the present invention.

In optional step 102, artificial turf infill is separated from an aged artificial turf. In one embodiment, the aged artificial turf includes an infill material including a non-synthetic (i.e., natural) infill, such as a sand infill (e.g., silica sand) and/or one or more other mineral infills, such as zeolite, silicate, and aluminum silicate, and/or a performance infill, such as an elastomeric infill (e.g., rubber or any polymer infill), and combinations thereof. Natural mineral infills, such as sand, may also be referred to as stabilizing infills. Stabilizing infills tend to separate and support the fibers, such as keeping the fibers directed in upright positions. Performance infills are those infills that may aid or contribute to the performance of activities being performed on the artificial turf, and also may mitigate the severity of injuries and/or greatly reduce the risk of injury. For example, performance infills may have cushioning effects, mitigate against skin injuries caused by sliding on the turf, and/or aid in traction. When stabilizing and performance infills are both present, the stabilizing infill typically forms a layer positioned below the performance infill layer. Other infill material may include natural fibers, such as burlap fibers, jute fibers, cotton fibers, wool fibers, hemp fibers, flax fibers, kenaf fibers, nettle fibers, sisal fibers, coconut fibers, walnut fibers and combinations thereof, and/or inorganic infills, including inorganic substances such as talcum, kaolin, calcium carbonate, magnesium carbonate, silicate, silicic acid, silicic acid ester, aluminum trihydrate, magnesium hydroxide, meta and/or polyphosphates, and coal fly ash and combinations thereof.

In one embodiment, the aged artificial turf is provided from a site at which the artificial turf had previously been installed and used (i.e., an installation site). Artificial turfs typically have a limited lifetime, dependent upon type of usage, environmental conditions, and/or composition of the artificial turf. Once an artificial turf has exceeded its lifetime, components of the artificial turf can either be recycled for use as components of a new artificial turf (e.g., as an elastic layer) or can be recycled to provide different products or products to be used in conjunction with artificial turfs. Furthermore, an artificial turf that has never been installed or used, but has undergone natural environmental aging due to exposure to weather or oxidizing conditions, for example, is deemed an aged artificial turf within the meaning of embodiments of the present disclosure.

Although in a preferred embodiment the separation is performed at an artificial turf processing site (e.g., a recycling center), the scope of the present invention covers separating the infill from the aged artificial turf on-site, thereby reducing the weight of the aged artificial turf for transport and reducing the amount of dust and contaminants created by the separation process at the processing site.

According to embodiments of the present invention, vacuum cleaners and/or mechanical beating and/or vibration devices known in the art are used to separate the infill from the aged artificial turf. Techniques and machines for separating infill from artificial turf are well known in the art and will not be discussed in further detail.

According to other embodiments of the present disclosure, up to 20 weight (wt.) % of infill may remain in the aged artificial turf after separation of the infill from the turf, however in a preferred embodiment, 10-20 wt. % of infill may remain in the aged artificial turf, and in a more preferred embodiment, 5-10 wt. % of infill may remain in the aged artificial turf, and in an even more preferred embodiment, approximately 0 - 2 or 3 wt. % of infill remains in the aged artificial turf.

Optional step 102 may optionally include separating the infill (that is separated from the aged artificial turf) into two or more constituent components. For example, in some embodiments components of infill may be separated from one another (e.g., rubber infill may be separated from sand infill) by any known conventional means, such as separating the fractions based on specific gravity to provide low density and high density fractions. Such conventional means include using water and/or air flow, or other mechanical means, such as one or more meshes of different sizes, to separate out the fractions, based on density and/or weight and/or size. Patent Publication No. US 2016/0067745 A1 to Andersen et al. describes some of these separation means.

Optional step 102 may optionally include embodiments in which the infill that has been separated from the turf, and that has been optionally separated into components, is filter and washed, or only washed, such that any aggregated infill is broken up into disaggregated components (via the mechanical processes of filtering and washing), thereby providing a substantially disaggregated infill, which is then added to premix step 106, process step 108 and/or mix step 112, which are described in detail further below.

Optional step 102 may also optionally include embodiments in which the infill that has been separated from the turf, and that has been optionally separated into components, is dried to reduce the water content, particularly when the separated infill has been washed. Commercially-available dryers, which are well known in the art, may be used to dry the separated infill. When the separated infill is water-free, or at least has a known water content that is below a predefined maximum level, the fluid elastic composite that is formed in step 112, to be discussed further below, may rapidly set (i.e., cure) without extensive foaming for providing a higher quality elastic layer.

In some embodiments, original grain (i.e., particle) sizes of infill of artificial turfs is approximately 0.5 - 2.5 mm, which may result in the grain sizes of infill separated from aged artificial turfs being in the range of approximately 0.1 microns - 10 mm, where the smaller-sized particles result from the abrasive action on the infill (i.e., wearing down and griding away of the particles due to frictional forces), and the larger-sized particles result from aggregation (i.e., clumping) and/or compaction. Frictional forces, as well as compaction forces, can be created by the direct contact of shoes of persons using artificial turf fields, as well as the impact of bodies and sports equipment of persons using the artificial turf fields, with the infill.

In step 104, the aged artificial turf is downsized (e.g., crushed, ground and/or shredded) into artificial turf fragments. In one embodiment, shredders, granulators, cutting mills, chippers, high pressure crushers and/or other types of crushing/shredding industrial machinery used to reduce the size of material may be used to reduce the aged artificial turf into artificial turf fragments. In one embodiment, the artificial turf fragments have an average size in a range of about 0.1 cm - 25 cm. In a preferred embodiment, the artificial turf fragments have an average size in a range of about 0.5 cm - 5 cm. However, the scope of the present disclosure covers fragments having average sizes greater than 25 cm and/or smaller than 0.1cm. In a further embodiment, the size distribution may be a Gaussian distribution around any average size value within the preferred range, however the scope of the present disclosure covers any non-gaussian size distribution of the fragments within the preferred range.

The artificial turf fragments may include synthetic and non-synthetic components, such as one or more of sand (also referred to as stabilizing infill), performance infill, aged artificial turf fibers and/or fragments of aged artificial turf fibers, downsized portions of artificial turf carrier layers, downsized portions of artificial turf backing layers, downsized portions of artificial turf elastic layers, adhesives, pigments, and combinations thereof.

If the infill is separated from aged artificial turf in optional step 102, then the artificial turf fragments contain minimal amounts (e.g., 0-2 or 3 wt. % in one embodiment) of infill. However, in other embodiments, the artificial turf fragments may include about 5-10 wt.% or 10 -20 wt. % of non-synthetic infill, performance infill, or a combination of both. If the infill is not separated from aged artificial turf in optional step 102, then the scope of the present disclosure covers artificial turf fragments having greater than 40 wt. % of infill, or alternatively 20-40 wt. % of infill.

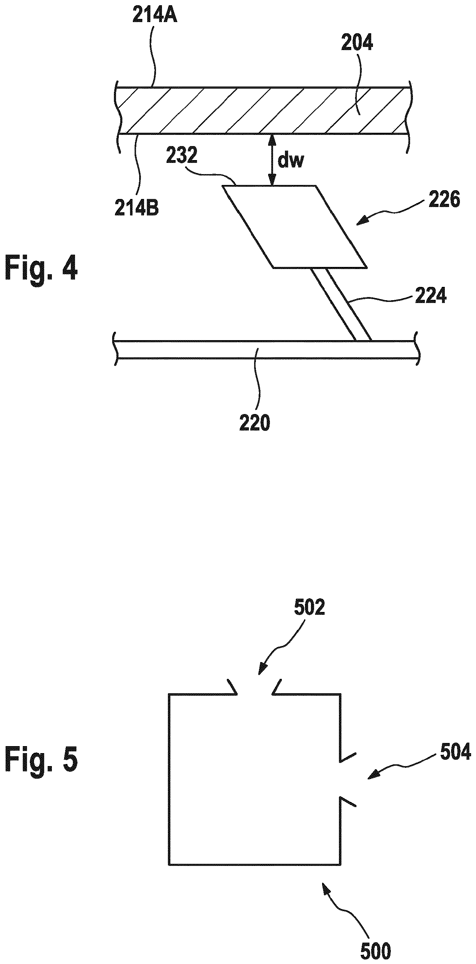

In optional step 106, the artificial turf fragments are preprocessed by, for example, a primary mixer, to form a premixed artificial turf material, also referred to herein as a mixed material or a material mixture, or simply a mixture. Primary mixers include conventional industrial mixers for mixing shredded and/or crushed products, such as downsized artificial turfs or other synthetic and/or non-synthetic fabrics. A primary mixer will be discussed further below in conjunction with Fig. 5.

In one embodiment, the artificial turf fragments are premixed with a first fraction of the infill separated out in optional step 102, and/or with aged artificial turf fibers and/or fragments of aged artificial turf fibers (also referred to as a first portion of aged artificial turf fibers) for forming a mixture, which is then further processed in step 108, which is discussed in more detail further below.

In one embodiment, a predetermined amount of mineral, such as sand which is separated from the aged artificial turf in optional step 102, is premixed with the artificial turf fragments (e.g., added to a primary mixer along with the artificial turf fragments) for forming the material mixture. The predetermined amount of sand depends upon the amount of sand selected to be in the manufactured elastic layer and upon the amount of residual mineral infill remaining in the artificial turf fragments. In another embodiment, an amount of mineral is added such that the mineral content in the material mixture is up to 85 wt. % of the material mixture, and in a preferred embodiment, between 20 - 85 wt. %. For example, a mineral, such as sand, may be added to the primary mixer such the amount of sand is any one of 20-30 wt. %. 30-40 wt. %, 40-50 wt. %, 50 - 60 wt. %, 60 - 70 wt. %, 70 - 80 wt. % or 80 - 85 wt. % of the material mixture.

In another embodiment, one or more additives are added to the primary mixer along with the artificial turf fragments for forming the material mixture. A described in more detail below in conjunction with step 108, the additives may include one or more dyes or pigments for coloring the material mixture, one or more polymers that assist flow of the material mixture in a melt system chamber and prevent adherence of the material mixture to surfaces of the melt system, flame retardants and/or a predetermined amount of mineral, such as sand, and combinations thereof. In one embodiment, polyethylene is added to the primary mixer. According to embodiments, polyethylene is added such that the material mixture includes polyethylene in the amount between 0.5 - 5 wt. %, and preferably in the amount of 2 wt. %. Advantageously, polyethylene acts as a rheology modifier.

In step 108, the artificial turf fragments, or alternatively the premixed artificial turf material (i.e., the mixture), are processed to form a plastic melt. In one embodiment, the artificial turf fragments include two or more plastic components, where at least two of the two or more plastic components include thermoplastic components, and where the plastic melt is a moldable mixture of the thermoplastic components. Although the plastic melt may contain mineral infill and/or thermostat components that do not melt within the scope of embodiments of the present invention, the thermoplastic components are not aggregated, nor partially melted, but are completely melted to form a moldable plastic melt mixture of the thermoplastic components. A moldable mixture, for example, is a mixture that may be placed in a molding tool for forming a part, or in other words, a mixture that is moldable.

In another embodiment, processing the artificial turf fragments or the mixture further includes rotationally mixing and transporting the artificial turf fragments or the mixture for generating the plastic melt. In yet another embodiment, rotationally mixing and transporting the artificial turf fragments or the mixture includes rotationally mixing and transporting the artificial turf fragments or the mixture at a pressure less than a maximum predefined pressure for generating the plastic melt. In another embodiment, the maximum predefined pressure is between about 0.1 - 20 bar.

In one embodiment, the artificial turf fragments or the mixture are rotationally mixed and translationally transported at a predefined temperature and a predefined pressure less than or equal to the maximum pressure to form the melt. The predefined temperature is based upon at least one melt temperature of the two or more thermoplastic components.

In another embodiment, rotationally mixing and transporting the artificial turf fragments or the mixture includes rotationally mixing and transporting the artificial turf fragments or the mixture in a chamber, where the chamber has a proximate end, a distal end, at least one input port positioned at the proximate end for receiving the artificial turf fragments or mixture, and at least one output port positioned at the distal end through which the plastic melt flows, and where the transporting further includes translationally transporting the artificial turf fragments or mixture toward the distal end of the chamber.

According to yet another embodiment, the pressure in the chamber is created solely by translationally transporting the artificial turf fragments or the mixture in the chamber.

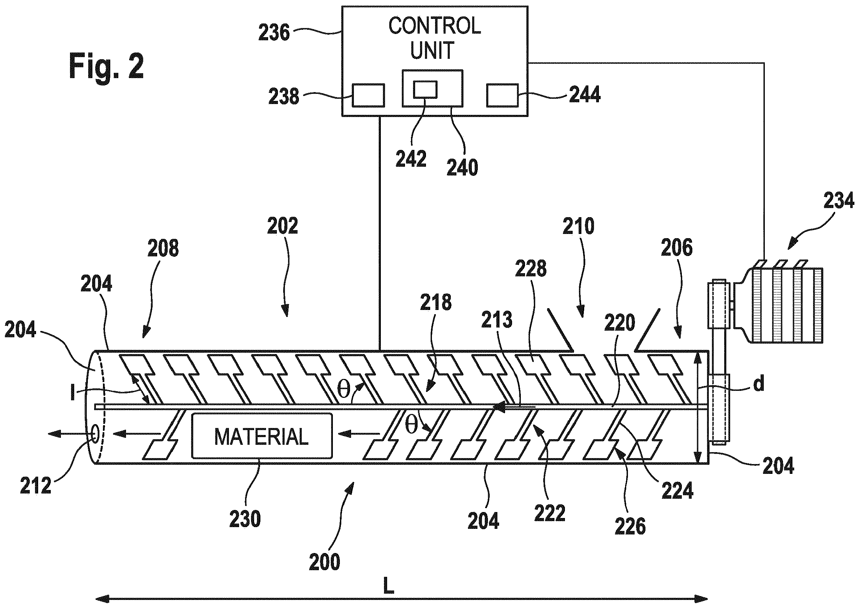

According to an embodiment of the present disclosure, an artificial turf melt system is used for processing the artificial turf fragments or the mixture in step 108. As discussed further below in conjunction with Fig. 2, the melt system includes a processing chamber having at least one input port for receiving the artificial turf fragments or the mixed material and at least one output port through which the melt flows. The melt system further includes a mixing unit for rotationally mixing the material and translationally transporting the material from the input port to the output port, one or more heating units for heating the material in the chamber to a predefined temperature, and an optional control unit for controlling the processing chamber.

In one embodiment, the predefined temperature (or a predefined temperature range) is selected by an operator of the system or determined by the control unit based upon data input to the control unit by the operator. The predefined temperature is a temperature that exceeds the melt temperatures of the thermoplastic components of the artificial turf fragments. Thermoplastic components include, for example, polyethylene (PE), polypropylene (PP) and polyamide (PA). The artificial turf fragments may also include thermoset components, such as polyurethane (PU) and latex that have strong cross-linking of polymers that resist melting, as well as sand or other mineral infill which will not melt under the temperature/pressure conditions of the present disclosure. For example, in one embodiment, the predefined temperature range is between about 100 and 400 °C, however in a preferred embodiment, the temperature of the material in the processing chamber is between about 110 and 240 °C, in another preferred embodiment between 130 and 240 °C, in a more preferred embodiment between 150 and 240 °C, and in another more preferred embodiment between 180 and 230 °C. In one embodiment, a maximum temperature of the predefined temperature range is selected, for example, by an operator of the melt system, that is less than the melt temperature of the infill component having the lowest melt temperature of all the infill components that are present in the artificial turf fragments or material mixture. In another embodiment, the maximum temperature of the predefined temperature range is selected that is less than the ignition temperature of the infill component having the lowest ignition temperature of all the infill components that are present in the artificial turf fragments or material mixture. As will be described further below in conjunction with Fig. 2, the system may have a database (or access to a database) from which the predefined temperature is determined based upon data input to the system by the operator, such as composition of the artificial turf.

In another embodiment, the predefined maximum pressure of the processing chamber (or a predefined maximum pressure range of the processing chamber) is selected by an operator of the system or determined by the control unit based upon data input to the control unit by the operator. In one embodiment, the predefined maximum pressure range is below about 20 bar, between about 0.1 - 20 bar in a preferred embodiment, less than about 10 bars in a more preferred embodiment, and less than about 8 bars in an even more preferred embodiment. Operating the processing chamber at these pressures allows for processing material in the chamber having up to 85 wt. % of hard, abrasive components (i.e., a Moh's hardness greater than about 6), such as silica sand infill, without any damage or excessive wear to the components of the melt system. As will be described further below in conjunction with Fig. 2, the system may have a database (or access to a database) from which the maximum pressure (or maximum pressure range) is determined based upon data input to the system by the operator, such as composition of the artificial turf.

Furthermore, step 108 may optionally include adding one or more additives to the chamber either with the turf fragments or the mixed material via the input ports or sometime after the turf fragments or the mixed material have been introduced into the chamber and rotationally mixed and/or translationally moved forward from the input port in the direction of the output port. For example, the additives may include one or more dyes or pigments for coloring the material, one or more polymers that assist material flow in the chamber and prevent adherence of the material mixture to surfaces of the melt system, flame retardants, and/or a measured amount of a mineral material, such as a measured amount of the sand infill component and/or the performance infill that was separated from the aged artificial turf in step 102. In one embodiment, polyethylene is added to the chamber. According to embodiments, polyethylene is added such that the turf fragments or the mixed material includes polyethylene in the amount between 0.5 - 5 wt. %, and preferably in the amount of 2 wt. %. Advantageously, polyethylene acts as a rheology modifier.

In another embodiment of the present disclosure, one or more polymers, for example production waste from fiber extrusion (fiber cuts) of artificial turf which typically contains polyethylene with a Melt Flow Index of 0.8- 5.0 (e.g., 2.16 kg per 10 minutes at 190°C), may be added to assist the rotational and/or translational flow of the material mixture or turf fragments in the processing chamber, as well as assist with increasing the homogeneity of the mineral material (e.g., sand) in the material mixture of turf fragments. Other polymers that may be added include waste plastics and aged plastics, such as plastics recovered from the ocean (i.e., ocean plastics) or landfills.

According to another embodiment of the present disclosure, non-fluorinated substances, such as silicone polymers, polyethylene glycol, or viscoelastic substances, such as a silanol or polyol cured by a borate, or a combination thereof, may be added to the material mixture to prevent or decrease the adhesion of the material mixture to component surfaces of the melt system, such as surfaces of the chamber walls, input/output ports, and mixing unit. Use of non-fluorinated additives may result in less toxic waste products being emitted from processing the artificial turf fragments by the melt system.

Turf material components, with the exception of silica sand, are in general flammable. Thus, according to one embodiment of the present disclosure, a flame retardant additive, such as Aluminum-Tri-Hydroxide (ATH), MgCl2 or Ammonium polyphosphate, may be added in the proportion of about 5 - 60 wt. % of the material mixture. However, since mineral components in the material mixture, such as sand, have a flame retarding effect, and since embodiments of the material mixture include unconventionally high mineral content (e.g., up to 85 wt. %), the amount of flame retardant additive may by in the lower range of 5 - 60 wt. %, or lower than 5 wt. %, or not added at all to the material mixture.

According to another embodiment, a measured amount of sand or other mineral material is added to the turf fragments such that a precise amount of mineral content of the material in the chamber is known and controlled. For example, the elastic layer manufactured according to method 100 may require a specific amount of static and/or dynamic friction between an upper surface of an elastic layer and an external object, such as, for example, an artificial turf that is positioned on the upper surface of the elastic layer, and thus a measured amount of sand, other minerals and/or other hard and abrasive materials (natural or synthetic) may be added to the turf fragments in the chamber to create some of the desired properties of the elastic layer. For example, mineral may be added to the chamber to create a material including the turf fragments and the mineral in which the mineral includes up to 85 wt. % of the material, and in a preferred embodiment, between 20 - 85 wt. %. For example, a mineral, such as sand, may be added to the turf fragments in the chamber such the amount of sand is any one of 20-30 wt. %. 30-40 wt. %, 40-50 wt. %, 50 - 60 wt. %, 60 - 70 wt. %, 70 - 80 wt. % or 80 - 85 wt. % of the material in the chamber.

Referring to optional premix step 106, and according to one embodiment, the artificial turf fragments are premixed with a first fraction of the separated infill and optionally with a first portion of aged artificial turf fibers for forming a mixture. Then, in step 108, the mixture is rotationally mixed and transported for generating the plastic melt. Alternatively, or additionally, a second fraction of the separated infill and optionally a second portion of the aged artificial turf fibers are mixed with plastic particles (generated from the plastic melt) and a binding agent for forming a fluid elastic composite, as described in more detail below in conjunction with step 112. The scope of the embodiments of the present invention cover combinations of the first and second fractions that are less than or equal to 100% of the separated infill. By way of non-limiting exemplary embodiments, the first fraction could be 60% and the second fraction 40%, or the first fraction could be 80% and the second fraction 0%. The first and second portions of the aged artificial turf fibers may or may not be equal, and by way of non-limiting exemplary embodiments, the first portion could be x wt. percent of the mixture and the second portion could be y wt. percent of the fluid elastic composite, e.g., 0 ≤ x ≤ 20 % wt. and 0 ≤ y ≤ 20 % wt.

In one embodiment, an operator (e.g., a person and/or machine) harvests artificial turf fibers from the aged artificial turf, by, for example, using commercially available mowing equipment or other cutting and/or extraction implements to separate at least portions of the fibers and/or entire fibers from the aged artificial turf, either on sites before aged artificial turfs are removed, or at a turf processing (e.g., recycling) center that processes aged artificial turfs (e.g., downsizing turfs into fragments and then separating components from the downsized fragments or separating components of the turf before downsizing the separated components into fragments).

In one embodiment, the mixture includes up to 85 wt. % of the first fraction of the separated infill. In another embodiment, the first fraction of the separated infill includes at least one of a mineral infill and an elastomeric infill. In another embodiment, the first fraction of the separated infill includes sand and optionally an elastomeric infill, and the mixture includes up to 80 wt. % of the sand of the first fraction of the separated infill.

In yet another embodiment, the first fraction of the separated infill includes sand, and a second fraction of the separated infill includes sand, where the first and second fraction of the sand in combination represent approximately 100% of the sand in the separated infill. As discussed further below in conjunction with step 112, the second fraction of the sand is mixed with plastic particles formed from the solidified melt and a binding agent for forming a fluid elastic composite, which then is applied to a substrate on site for forming an elastic layer. Typically, sand infill of aged artificial turfs is contaminated by adhering microplastics resulting from usage of the artificial turfs. For example, microplastic may be generated by the wear and tear on artificial turf due to use, chemical exposure, and/or weathering, such a exposure to sunlight and freeze/thaw cycles. Such complete recycling of the sand of aged artificial turfs, and in particular sand contaminated by microplastics, reduces the cost of disposing of sand in landfills and reduces the amount of microplastics deposited in landfills, thereby mitigating the well-known adverse effects of microplastics on the environment.

In another embodiment, optional step 102 is not performed, and thus the artificial turf downsized in step 104 and the fragments or mixture processed in step 108 contain preexisting infill. The preexisting infill includes at least one of a mineral infill and an elastomeric infill. In yet another embodiment, additional infill, such as sand or other mineral infill, preferably recycled from aged artificial turfs, but optionally or additionally obtained from other sources (e.g., mined or synthetically produced), may be added in premix step 106 and/or in step 112. In yet another embodiment, the artificial turf fragments containing the preexisting infill are premixed with aged artificial turf fibers and/or aged artificial turf fiber fragments (e.g., a first portion of aged artificial turf fibers) for forming the mixture in step 106. The mixture is then rotationally mixed and transported for generating the plastic melt. Alternatively, or additionally, a second portion of the aged artificial turf fibers are mixed with the plastic particles (formed from the melt of step 108) and a binding agent for forming a fluid elastic composite, as described in more detail below in conjunction with step 112. The first and second portions of the aged artificial turf fibers may or may not be equal, and by way of non-limiting exemplary embodiments, the first portion could be x percent weight (wt.) of the mixture and the second portion could be y percent wt. of the fluid elastic composite, e.g., 0 ≤ x ≤ 20 % wt. and 0 ≤ y ≤ 20 % wt.

In step 110, after the plastic melt solidifies, the solidified plastic melt is downsized into plastic particles. For example, in one embodiment, the portion of the material (i.e., turf fragments or the premixed mixture) that has been moved forward in the chamber from the input port to the output port, which is in the form of a melt before or upon reaching the output port, is output from the output port. In one embodiment, the melt flows through the output port only under the force of the chamber pressure created by the motion of the mixing unit transporting the material mixture forward in the chamber in the direction from the input port to the output port, or in the case of e.g., a cylindrical chamber, transporting the material mixture in a longitudinal direction of the processing chamber, in contrast to well-known extrusion processes that force a melt under high pressure through a die for forming a die-cast product.

In another embodiment, the melt flows from the output port(s) in the form of one or more threads and, as the threads cool and solidify, commercially available downsizing machinery, having chopping means (e.g., blades), or crushing and/or grinding means that break apart the solidified threads, are used to downsize the solidified plastic threads into plastic particles. In another embodiment, the melt is output from the output port into holding containers (e.g., block molds or casts), and after solidification, the solidified plastic forms are removed from the holding containers and commercially available downsizing machinery are used to downsize the solidified plastic into plastic particles. In yet another embodiment, the melt output (e.g., the threads) can be directed into a water bath and the threads then cut into particles under water.

Figure 2 is a schematic diagram of an artificial turf melt system 200, according to an embodiment of the present disclosure. The melt system 200 may be used to process the artificial turf fragments or the mixed material as described above in conjunction with step 108 of Fig. 1.

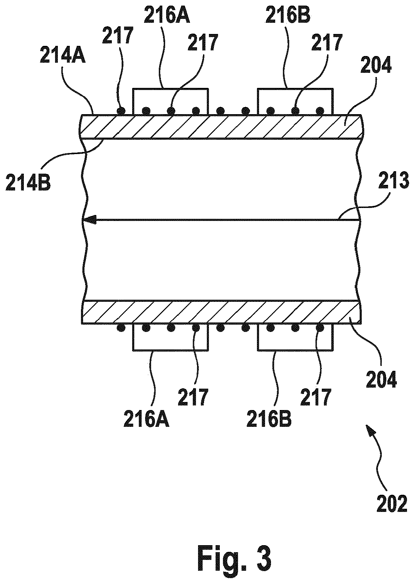

In one embodiment, the melt system 200 includes a chamber 202 having chamber walls 204, a proximate end 206 and a distal end 208. The melt system 200 includes one or more input ports 210 positioned at the proximate end 206 and one or more output ports 212 positioned at the distal end 208. As illustrated, the chamber 202 is cylindrical in shape, centered about a longitudinal axis 213, and has a longitudinal length L and a diameter d. The length L is greater than the diameter d. However, the scope of the present disclosure covers chambers 202 having other shapes, such as substantially rectangular or substantially elliptical chambers, for example. According to another embodiment, and as illustrated by Fig. 3 showing a longitudinal cross section of a portion of the chamber 202, the chamber walls 204 include an outside surface 214A, an inside surface 214B, and at least one heating unit 216 including heating elements 217 in contact with the outside surface 214A of the chamber walls 204. For ease of illustration, only two heating units 216A and 216B are shown, however, the remaining heating elements 217 may be components of other heating units (not shown), and the heating units may include any number of heating elements. In one embodiment, the heating unit may include electronics, thermostats, controllers, power supplies, etc., and the heating elements may be conducting wires configured to circumferentially wrap around the outside surface 214A of the chamber 202. A heating unit and its corresponding heating elements may be housed in separate enclosures and electrically coupled together, or a heating unit may house it's corresponding heating elements. In another embodiment (not shown), at least a portion of the heating elements may be contained in the chamber walls between the outside surface and the inside surfaces 214A, 214B.

Referring again to Fig. 2, the melt system 200 also includes one or more mixing units 218. Each mixing unit 218 includes a rotatable longitudinal portion 220 and a plurality of mixers 222. As illustrated, each mixer of the plurality of mixers 222 includes a connector portion 224 connected to the longitudinal portion 220 and a mixing portion 226 connected to its respective connector portion 224. The connector portion 224 extends at an angle θ to the longitudinal axis 213 of the chamber 202. Although Fig. 2 illustrates only one mixing unit 218, the scope of the present disclosure covers two or more mixing units 218, each having a rotatable longitudinal portion. For example, each rotatable longitudinal portion (i.e., rotatable axis) may be positioned parallel, but not concurrent with the longitudinal axis 213 of the chamber 202, such that the plurality of mixers of each mixing unit do not physically interfere with one another when the mixing units are being operated (i.e., rotated).

In one embodiment, the connector portion 224 forms the angle θ with the longitudinal axis 213, where 0 ≤ θ ≤ 180. In one embodiment, the angle θ may be based upon a surface area of the mixing portion 226, a length 1 of the connector portion 224 and/or a general shape of a surface 228 of the mixing portion 226 (e.g., flat, concave, convex). According to one embodiment, values for θ, the surface area of the mixing portion 226, and/or the general shape of the surface 228 of the mixing portion 226 are determined such that material 230 in the chamber 202 is effectively rotationally mixed and translationally advanced (i.e., moved forward from the proximate end 206 of the chamber 202 to the distal end 208 of the chamber 202, or in other words, moved parallel to the longitudinal axis 213 of the chamber 202). For clarity, only a portion of the material 230 in the chamber 202 is illustrated. In one embodiment, material 230 may either be the material mixture or the turf fragments with an added mineral. In another embodiment, the material 230 may be a combination of turf fragments and the added mineral with the material mixture. The composition of the material 230 depends upon whether a material mixture, turf fragments and the added mineral, or a combination of both are fed into the melt system 200 via the one or more input ports 210. In addition, the material 230 may be in a semi-melt state, dependent upon where it is located in the chamber with respect to the proximate and distal ends 206, 208. Within the meaning of the present disclosure, the material in the chamber is effectively rotationally mixed and translationally advanced when after a few rotations (e.g., 1-5 rotations) of the longitudinal portion 220 about the longitudinal axis 213, any material 230 at a first position in the chamber 202 is moved to a second nearby position (not shown) in the chamber.

In one embodiment of the present disclosure, one or more mixing portions 226 are configured as paddles. The paddles 226 may be elliptical, spherical, or polygonal shaped, for example, and may have smooth, ridged, or serrated surfaces 228. As illustrated by Fig. 4, a distance d_{w} is the distance between an outer paddle edge 232 (i.e., the edge of a paddle that is closest to the inside surface 214B of chamber wall 204) and the inside surface 214B of the chamber wall 204. The distance d_{w} may depend upon one or more of: largest average sizes of the turf fragments or material mixture placed into the chamber 202, the throughput (i.e., rate of flow) of the material 230 in the chamber 202 parallel to the longitudinal axis 213, rotational speed of the paddles 226, and the average amount of weight percentage of sand or other abrasive infill present in the artificial turf fragments. The chamber pressure created by the rotational motion of the paddles 226 may depend not only upon the rotational (i.e., angular) speed of the paddles 226, but also upon the distance d_{w}. In one embodiment, d_{w} is greater or equal to the average size of the artificial turf fragments or material mixture, and in another embodiment, is equal to the size of the largest or near largest artificial turf fragment or material mixture.

Referring again to Fig. 2, and according to another embodiment of the present disclosure, the melt system 200 includes a power source 234 and a control unit 236. The power source 234 is mechanically coupled to the rotatable longitudinal portion 220 of the mixing unit 218 and is configured to rotate the longitudinal portion 220 at a range of angular speeds.

The control unit 236 is electrical coupled to the power source 234 and the heating unit 216 of the chamber walls 204. The control unit 236 may include one or more of a processing unit 238, a memory 240 including a database 242 and an input/output user interface 244. In one embodiment, the control unit 236 includes the processing unit 238, and the memory 240 and/or the I/O user interface 244 are components of an external computer or computing system (not shown).

In one embodiment, the control unit 236 may access the database 242 and receive user input via the user I/O interface 244 for determining a rotational speed of the longitudinal portion 220 of the mixing unit 218 and the predefined temperature (i.e., operating temperature) of the chamber 202. The control unit 236 may control the power source 234 for achieving the determined rotational speed and the heating element 216 for achieving the determined predefined temperature. The control unit 236 may also be electrically powered by the power source 234.

The processing unit 238 may be a central processing unit, such as a microprocessor and/or microcontroller, and the I/O interface 244 may include a display and operator input, such as a keypad or touch screen. The memory 240 may be configured to store an executable program that controls operation of the processing chamber 202. For example, the memory 240, or an external memory, external hard drive, and/or an external computer (not shown), may store the database 242 having a plurality of predefined processing chamber operating temperatures and/or a plurality of predefined processing chamber operating temperature ranges and/or sets of artificial turf compositions. Each predefined temperature and/or predefined temperature range corresponds to a unique set of artificial turf composition. For example, an artificial turf composition may include weight percentage of each component of an artificial turf, including percentages of one or more of sand, other infills, polypropylene, polyethylene, polyurethane, thermoplastic, thermoset material and adhesives. In one embodiment, an operator may input, via the I/O interface 244, a composition of the artificial turf being processed by the melt system 200, a predefined maximum pressure (or a predefined maximum pressure range), a mixing rate and/or a throughput rate, or any combination thereof.

The control unit 236, upon reception of operator input, such as predefined temperature, predefined maximum pressure, artificial turf composition, mixing rate and/or throughput rate, executes a program (i.e., software) stored in the memory 240 for controlling the melt system 200. For example, the control unit 236 may control the length of processing time, chamber temperature, throughput rate, mixing rate and/or maximum pressure in the chamber 202 based only on operator input, only on data stored in the database 242, or a combination of both.

In one embodiment, the predefined chamber temperature is selected by the operator or determined by the control unit 236 based upon operator input of the composition of the artificial turf. The control unit 236 may then access the database 242 to determine the predefined temperature from a temperature/composition database table (not shown) of the database 242. In one embodiment, the predefined temperature (or temperature range) is greater or equal to the melt temperatures of each of the thermoplastic components of the artificial turf.

In another embodiment, the predefined maximum pressure of the processing chamber 202 is selected by the operator or determined by the control unit 236 based upon weight percentage of the infill of the artificial turf fragments. According to an embodiment, as the weight percentage of infill, or preferably as the weight percentage of abrasive infill, such as the mineral infill and/or one or more of the performance infills and/or one or more of the natural fiber infills of the artificial turf fragments increases, the predefined maximum pressure of the chamber 202 during processing of the fragments or material mixture, including rotationally mixing, heating, and moving forward the material 230 from input port 210 to output port 212, decreases, in order to reduce abrasion to the components of the melt system 200 (e.g., abrasion to the mixers 222, chamber walls 204, input/output ports 210, 212) and/or reduce production of frictional heat that may cause temperature variations throughout the material 230 in the chamber 202.

In another embodiment, the predefined maximum pressure, as determined by the control unit 236 or as received by the control unit 236 as operator input, may be used by the control unit 236 to determine a maximum throughput rate of the material 230 and/or a maximum mixing rate (e.g., a rotational speed of the longitudinal portion 220 of the mixing unit 226) for rotationally mixing the material 230 inside the chamber 202, above which the pressure inside the chamber 202 may exceed the predefined maximum pressure.

The control unit 236 may include, but are not limited to, one or more processors or processing units, a storage system, a memory unit, and a bus that couples various system components including memory unit to processor. Storage system may include for example a hard disk drive (HDD). Memory unit may include computer system readable media in the form of volatile memory, such as random access memory (RAM) and/or cache memory.

Fig. 5 is a schematic of a primary mixer 500, according to an embodiment of the present disclosure. The primary mixer 500 has an input 502 and an output 504. In one embodiment according to the present disclosure, the input of the primary mixer 502 receives the artificial turf fragments and a mineral, such as sand. The sand separated in step 106 of Fig. 1 may be used as the mineral input into the primary mixer. In one embodiment, a predetermined amount of mineral is added to the primary mixer along with the artificial turf fragments. The predetermined amount of sand depends upon the amount of sand selected to be in the plastic particles and upon the amount of residual mineral infill remaining in the artificial turf fragments. The primary mixer 500 receives the artificial turf fragments and the added mineral via the input 502, mixes the artificial turf fragments and the added mineral, and provides the material mixture via the output 504 to the one or more input ports 210 of the melt system 200.

In one embodiment, an amount of mineral is added such that the mineral content in the material mixture is up to 85 wt. % of the material mixture, and in a preferred embodiment, between 20 - 85 wt. %. For example, a mineral, such as sand, may be added to the primary mixer such the amount of sand is any one of 20-30 wt. %. 30-40 wt. %, 40-50 wt. %, 50 - 60 wt. %, 60 - 70 wt. %, 70 - 80 wt. % or 80 - 85 wt. % of the material mixture.

Primary mixers include conventional industrial mixers for mixing shredded and/or crushed products, such as downsized artificial turfs or other synthetic and/or non-synthetic fabrics.

In step 112, the plastic particles generated in step 110 are mixed with a binding agent and optionally with a second fraction of the separated infill and/or a portion (e.g., a second portion) of aged artificial turf fibers and/or aged artificial turf fiber fragments for forming a fluid elastic composite. In one embodiment, heat is not applied during the mixing of step 112 (i.e., step 112 is a thermally untreated processing step). Within the meaning of the present disclosure, thermally untreated means that heat is not applied from an external source. As known to those of skill, application of heat to infill may result in at least portions of the infill becoming aggregated (i.e., clumped together), due to the solving or partial decomposing of rubber-based and/or some plastic-based infill, as well as the melting or partial melting of foreign matter that may be present in the infill, such as loose pieces of artificial turf fibers and/or loose pieces of the backing layer and/or loose pieces of the carrier layer, that have broken off during use of an artificial turf over its lifetime.

In one embodiment, aged artificial turf(s) are mowed for generating the aged artificial turf fibers (e.g., first and second portions of aged artificial turf fibers), which are then optionally mixed with the other components in steps 106 and 112, respectively. A cutting machine may be used to mow (i.e., cut or downsize) the aged artificial turf fibers of the aged artificial turf and/or other aged artificial turf(s).

In one embodiment, the binding agent is fluid polyurethane, and thus the fluid elastic composite may be a polyurethane fluid including a suspension of the plastic particles and optionally infill (i.e., the separated infill) and/or aged artificial turf fibers and/or fragments of aged artificial turf fibers that solidifies into an elastic layer. In other embodiments, the binding agent may be a mixture of polyols and poly isocyanates that solidify into polyurethane, or any other kind of fluid that is capable of solidifying after a pre-defined setting (or hardening) time into a solid layer or film. In some alternate embodiments, the binding agent is mixed in step 112 not only with the plastic particles and optionally with separated infill and/or aged artificial turf fibers, but also optionally with fragments of aged elastic layers and/or additional rubber granules, e.g., SBR or EPDM granules, and/or with rubber-coated granulates made of plant fibers.

In some embodiments the fluid (i.e., the fluid elastic composite) may solidify into a film by a drying process or by a chemical reaction resulting in a solidification of the fluid. Such a chemical reaction can be, for example, a polymerization.

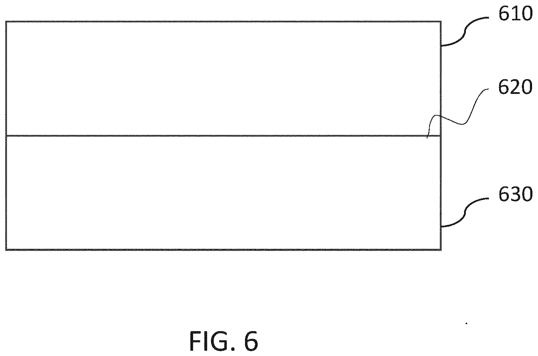

In step 114, and as illustrated by Fig. 6, the fluid elastic composite formed in step 112 is applied to a top surface 620 of a substrate 630 for forming the elastic layer 610. The fluid elastic composite, upon solidification, forms the elastic layer 610. The substrate 630 is located at a site at which an elastic layer is to be manufactured, according to embodiments of the present disclosure. The site may be the location of a formerly existing artificial turf that has been removed, thereby exposing the top surface 620 of the underlying substrate 630 to application of the fluid elastic composite, or the site may by any location which did have a preexisting artificial turf. In such locations, the substrate 630 is either naturally occurring or man-made, and may be prepared for application of the fluid elastic composite. According to embodiments, the substrate includes one of: soil, rock, gravel, and cement. However, the scope of the embodiments of the present disclosure include substates that provide any stable platform, as known to those of skill in the art. For example, the substrate 630 is an existing (i.e., aged) elastic layer that was previously used as a base of support for an aged artificial turf that has since been removed.

In one embodiment, the fluid elastic composite is applied by pouring or spaying the fluid elastic composite over the top surface 620 of the substrate 630 on site. In preferred embodiments, any commercially available machine known in the art is utilized to pour or spray the fluid elastic composite on the top surface 620 of the substrate 630.

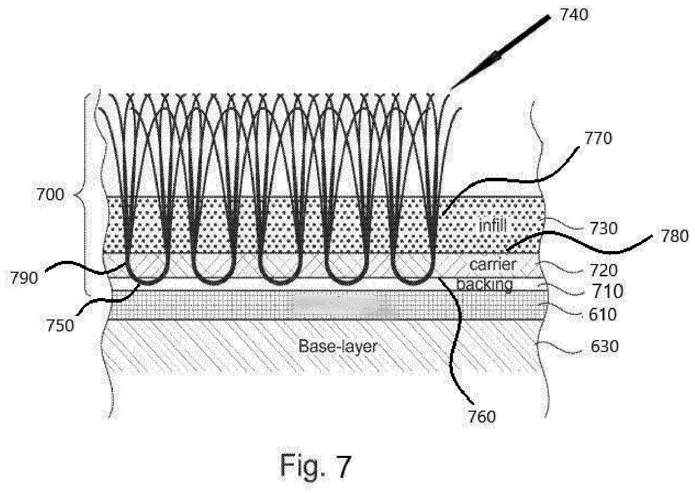

In optional step 116, an artificial turf 700, also referred to as a new artificial turf 700, is positioned directly on the elastic layer 610, resulting in the artificial turf system illustrated in Fig. 7, according to an embodiment of the invention.

The new artificial turf 700 includes an optional backing layer 710, carrier mesh layer 720, an optional infill 730 (e.g., one or more infill layers), and fibers 740. The optional backing layer 710 is positioned on a bottom side 760 of the carrier layer 720, where the bottom side faces towards the substrate 630. The backing 710 may serve to mechanically bind the artificial turf fibers. Various types of glues, coatings or adhesives could be used for the backing, e.g., latex or PU. Using a backing may be beneficial, as it may increase elasticity of the artificial turf system.

Furthermore, the optional infill layer 730 typically includes infill that is a loose collection of granulates arranged on the top surface 780 of the carrier layer 720, thereby filling the space between lower portions of the artificial turf fibers to a typical depth, as is known in the art. Conventionally, the infill is a rubber infill. The infill may be used to enable the artificial turf fibers to stand vertically up and look like a natural grass athletic field, as well as provide cushion for players on the field. Additionally, the infill may emulate the feeling of natural soil and provide a realistic bounce when sports are played on the field.

The artificial turf fibers 740 are conventionally arranged in the carrier mesh layer 720, e.g., a textile plane, by means of tufting. Tufting is a type of textile weaving in which an artificial turf fiber (that may be a monofilament or a bundle of multiple monofilaments) is inserted on a carrier mesh. As depicted in Fig. 7, first parts 750 of the artificial turf fibers 740 are positioned below the bottom side 760 of the carrier mesh 720 and second parts 770 of the artificial turf fibers 740 are positioned above a top side 780 of the carrier mesh 720. If the optional backing layer 710 is present, then the first parts 750 of the artificial turf fibers 740 are incorporated within the backing layer 710, thereby providing additional anchoring of the fibers. The filler 730 is conventionally added after installation of the new artificial turf 700.

According to some embodiments, the new artificial turf 700 is positioned directly on the elastic layer 610 after the fluid elastic composite has completely solidified (e.g., has completely cured) into the elastic layer 610. This may have the advantage that the application of the new artificial turf is facilitated as the machine or person applying the new artificial turf can move over a hardened elastic layer.

According to some other embodiments, the new artificial turf 700 is positioned directly on the elastic layer 610 before the elastic layer is in a complete solidified state (e.g., at some point in time during the solidification process of the fluid elastic composite). This may have the advantage that a lower side of the new artificial turf is in contact with the not-yet solidified elastic layer (i.e., with the not-yet completely cured fluid elastic composite) and the fluid elastic composite may penetrate the backing layer 710 (if present) and/or the carrier layer 720 of the new artificial turf 700. Thus, the fluid elastic composite may incorporate portions of the new artificial turf 700.

This may increase the stability of the generated flooring because the fluid elastic composite may contact and wet one or more lower layers of the new artificial turf and thus mechanically fix the new artificial turf to the elastic layer upon hardening. The combination of the fixation of the first parts 750 of the artificial turf fibers 740 in the hardened elastic composite and the fixation of middle parts 790 of the artificial turf fibers 740 in the carrier mesh 720 provide for further strong support of the new artificial turf fibers 740 in the artificial turf system (i.e., the combination of the new artificial turf 700, elastic layer 610 and substrate 630).

As illustrated in Fig. 7, the new artificial turf 700 of the artificial turf system directly rests on the elastic layer 610 which directly rests on the substrate 630, e.g., soil, rock, gravel, cement or any other type of stable platform that offers adequate support for whatever activity the new artificial turf 700 was designed. In preferred embodiments, a person and/or a machine lays the new artificial turf 700 over the elastic layer 610 at any point in time during its curing process or after the fluid elastic composite has completely solidified into the elastic layer 610.

According to embodiments of the present invention, infill separated from aged artificial turf may include: mineral infill, including one or more mineral components, such as sand, zeolite, silicate, and aluminum silicate; inorganic infill, including one or more inorganic substances such as talcum, kaolin, calcium carbonate, magnesium carbonate, silicate, silicic acid, silicic acid ester, aluminum trihydrate, magnesium hydroxide, meta and/or polyphosphates, and coal fly ash; polymer infill (i.e., infill made from one or more polymer materials) or organic infill (i.e., infill made from one or more organic materials), and combinations thereof. For example, poly infill may include PU coated fiber or PU encapsulated SBR granulate, sulfur and/or peroxidic cured EPDM, SBR (e.g., car tires), SBR/NBR (e.g., truck tires), TPE (thermoplastic elastomers, e.g., block copolymers such as styrene butadiene styrene SBS or styrene ethylene styrene butadiene) and/or TPV (i.e., vulcanized thermoplastics). Organic infill may include, e.g., olive pits, hemp and/or burlap, and may also be referred to as plant-based infill.

In embodiments, elastic properties of the formed elastic layer may be tuned by the content (e.g., amounts and types) of mineral infill that is added as part of the first and/or second fractions of separated infill during mixing steps 106 and/or 112 when forming the mixture and/or the fluid elastic composite, respectively.

Due to usage of artificial turfs, and particularly as a result of the frictional and/or compressional forces created when players run over artificial turf fields, a fraction of the infill particles can aggregate over time. In some embodiments, the artificial turf infill that is optionally added in mix step 112 is composed substantially of disaggregated artificial turf infill (e.g., approximately 100 wt. % disaggregated infill, or approximately 95 - 99 wt. % disaggregated infill, or over approximately 90 wt. % disaggregated infill). In one embodiment, the infill separated from the aged turf in step 102 is filtered and/or washed such that any aggregated infill is either filtered out or broken up, thereby providing a substantially disaggregated processed infill, which is then mixed with the binding agent and the plastic particles for providing the fluid elastic composite in step 112.

In addition, and as a result mainly from the frictional forces created when players run over artificial turf fields, the infill, which contained originally-sized infill particles, can be broken down into smaller particles, e.g., into particles smaller than approximately 0.1 mm, defined to be "small particles" with respect to embodiments of the present invention. In some embodiments of the present invention, the infill that is mixed with the binding agent and plastic particles (for forming the fluid elastic composite) in step 112 does not contain small particles, or at least does not contain a substantial amount of small particles (e.g., is some embodiments, less then approximately 10 wt. %, 5 wt. % or 3 wt. % of the infill used in the mixing step contains particles smaller than about 0.1 mm). In other embodiments, approximately 2-3 wt. % of the infill used in the mixing step contains particles smaller than about 0.1 mm. Small particles (less than approximately 0.1 mm) requires more binding agent per unit volume of the particle as compared to particles of larger size. In addition, substantial amounts of small particles in the mixture, and thus in the elastic layer formed from the mixture, reduce water permeability of the elastic layer. A water permeable elastic layer is preferred such that water can be more effectively drained from the sports field into the underlying substate (e.g., the ground). Furthermore, substantial amounts of small particles in the mixture can adversely affect the viscosity/flow properties of the binding agent, and thus the viscosity/flow properties of the fluid elastic composite mixture (e.g., adversely increasing the viscosity), as well as advancing or triggering undesirable compaction processes in which finer fraction of the particles are sandwiched between coarser fractions of the particles, thereby reducing the overall elasticity of the elastic layer.

In some embodiments, the small particles, or at least a substantial amount of the small particles (e.g., over approximately 90 wt. %) are removed from the infill separated in step 102 via a filtering of the separated infill (e.g., filtering via a system of one or more meshes having one or more different mesh size openings), as performed as an optional additional procedure of step 102. Furthermore, step 102 optionally includes pressing the filtered infill, resulting in the aggregation of any remaining small particles into larger particles (referred to as small particle aggregates). The filtered infill, including the small particle aggregates that are preferably larger than approximately 0.1 mm, is then mixed with the binding agent and the plastic particles in step 112 for forming the fluid elastic composite. Industrial presses, such as compaction presses known in the art, may be operated at corresponding predefined pressures, predefined time durations (and optionally corresponding predefined temperatures), such that only infill smaller than 0.1mm is aggregated into larger particles (into the small particle aggregates, i.e, aggregates composed of small particles, where the small particles aggregates are preferably larger than approximately 0.1 mm). In another embodiment, the pressed filtered infill is additionally filtered in step 102 for removing any remaining infill, including any aggregated infill formed by the pressing process, that is smaller than approximately 0.1 mm.

Some fraction of the infill particles, that were broken down into small particles via frictional forces created via usage of the artificial turf sports field as described above, may have become aggregated, as a result of, e.g., compressional forces generated from players using the artificial turf sports field. In some embodiments, the aggregated material consisting of an aggregation of small particles are not filtered out of the infill, but instead are mixed with the binding agent and the plastic particles in step 112 for forming the fluid elastic composite. Even though the small particles are not preferred to be a part of the fluid elastic composite binder mixture, including these small particles in the mixture provides a pathway for recycling the small particles, in contrast to dumping the small particles, which may also include microplastics adhering to the surfaces of the small particles, into landfills.

In other embodiments, the separated infill, optionally separated into constituent components, filtered and/or washed, is used as a component in other liquid elastic composites (e.g., mixed together with a binding agent and plastic particles, as described in the present embodiments) for forming, preferably on site and in situ, other additional elastic layers (e.g., one or more additional elastic layers below the elastic layer 610 and/or the substrate 630 forming a sub-substrate layer (not shown) (also referred to as a subbase layer) and/or one or more additional elastic layers above the elastic layer 610, which forms other elastic layers (not shown) of the artificial turf (e.g., artificial turf 600)).

Embodiments of the present invention address the ban after 2028, by the ECHA (European Chemical Agency), of microplastics, both primary microplastics (i.e., specifically manufactured for use as a microplastic) and secondary microplastics (i.e., plastics which break down into microplastics and contaminate the environment, such as the microplastics contaminating the infill of used artificial turfs). Microplastics are becoming a major environmental crisis, polluting the soil and oceans, and contaminating the food chain. Embodiments of the present invention mitigate the amount of microplastic waste contaminating the environment, from both a health perspective and a legal prospective, by recycling and immobilizing the waste as components of new, useful products.

Aspects of the present disclosure are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

Embodiments of the present disclosure may be a system, a method, a product, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire.

## Claims

1. A method of manufacturing an elastic layer on site, comprising:
downsizing (104) an aged artificial turf into artificial turf fragments;
processing (108) the artificial turf fragments for generating a plastic melt;
after the plastic melt solidifies, downsizing (110) the solidified plastic melt into plastic particles;
mixing (112) the plastic particles with a binding agent for forming a fluid elastic composite; and
applying (114) the fluid elastic composite on a substrate (630) at the site for forming the elastic layer (610).

2. The method of claim 1, wherein the artificial turf fragments comprise two or more plastic components, wherein at least two of the two or more plastic components comprise thermoplastic components, and wherein the plastic melt comprises a moldable mixture of the at least two thermoplastic components.

3. The method of claim 2, wherein processing the artificial turf fragments comprises rotationally mixing and transporting the artificial turf fragments for generating the plastic melt.

4. The method of claim 3, wherein rotationally mixing and transporting the artificial turf fragments further comprises rotationally mixing and transporting the artificial turf fragments at a pressure less than a maximum predefined pressure for generating the plastic melt.

5. The method of claim 4, wherein the maximum predefined pressure is between about 0.1 - 20 bar.

6. The method of any one of claims 4-5, wherein rotationally mixing and transporting the artificial turf fragments at the pressure less than the maximum predefined pressure further comprises rotationally mixing and transporting the artificial turf fragments at a predefined temperature, the predefined temperature based upon at least one melt temperature of the two or more thermoplastic components.

7. The method of any one of claims 4-6, wherein rotationally mixing and transporting the artificial turf fragments comprises rotationally mixing and transporting the artificial turf fragments in a chamber (202), the chamber having a proximate end (206), a distal end (208), at least one input port (210) positioned at the proximate end for receiving the artificial turf fragments, and at least one output port (212) positioned at the distal end through which the plastic melt flows, and wherein the transporting further comprises translationally transporting the artificial turf fragments toward the distal end of the chamber.

8. The method of claim 7, wherein the pressure in the chamber is created solely by translationally transporting the artificial turf fragments in the chamber.

9. The method of any one of claims 3-8, wherein the aged artificial turf comprises infill, and wherein the method further comprises:
separating the infill from the aged artificial turf before downsizing the aged artificial turf.

10. The method of claim 9, further comprising:
premixing the artificial turf fragments with a first fraction of the separated infill and optionally with a first portion of aged artificial turf fibers for forming a mixture, and wherein rotationally mixing and transporting the artificial turf fragments comprises rotationally mixing and transporting the mixture for generating the plastic melt; and/or
adding a second fraction of the separated infill and optionally a second portion of the aged artificial turf fibers to the mixing of the plastic particles with the binding agent for forming the fluid elastic composite.

11. The method of claim 10, wherein the mixture comprises up to 85 wt. % of the first fraction of the separated infill.

12. The method of claim 11, wherein the first and second fractions of the separated infill comprise at least one of a mineral infill and an elastomeric infill.

13. The method of claim 10, wherein the first and second fractions of the separated infill comprise sand and optionally an elastomeric infill, and wherein the mixture comprises up to 80 wt. % of the sand of the first fraction of the separated infill.

14. The method of claim 10, wherein the first and second fraction of the separated infill comprise sand, wherein the first and second fraction of the sand in combination represent 100% of the sand in the separated infill, and wherein the sand is contaminated by adhering microplastics resulting from usage of the aged artificial turf comprising the sand infill.

15. The method of claim 10, wherein premixing further comprises premixing the artificial turf fragments with the first fraction of the separated infill and optionally with the first portion of aged artificial turf fibers and with a polyethylene for forming the mixture, the mixture comprising polyethylene in an amount between 0.5 - 5 wt. %, preferably 2 wt. %.

16. The method of any one of claims 3-8, wherein the aged artificial turf comprises infill, wherein the plastic melt, generated from rotationally mixing and transporting the artificial turf fragments, comprises the infill, and wherein the infill comprises at least one of a mineral infill and an elastomeric infill.

17. The method of claim 16, further comprising:
premixing the artificial turf fragments with a first portion of aged artificial turf fibers for forming a mixture, and wherein rotationally mixing and transporting the artificial turf fragments comprises rotationally mixing and transporting the mixture for generating the plastic melt; and/or
adding a second portion of the aged artificial turf fibers to the mixing of the plastic particles with the binding agent for forming the fluid elastic composite.

18. The method of claim 17, wherein premixing further comprises premixing the artificial turf fragments with the first portion of aged artificial turf fibers and with a polyethylene for forming the mixture, the mixture comprising polyethylene in an amount between 0.5 - 5 wt. %, preferably 2 wt. %.

19. The method of any one of the previous claims, wherein applying the fluid elastic composite on the substrate at the site comprises pouring or spraying the fluid elastic composite on the substrate at the site for forming the elastic layer.

20. The method of any one of the previous claims, wherein the fragments of the aged artificial turf comprise one or more of: aged artificial turf fibers, downsized portions of artificial turf carrier layers, downsized portions of artificial turf backing layers and downsized portions of artificial turf elastic layers.

21. The method of claim 20, further comprising mowing the aged artificial turf for generating the aged artificial turf fibers.

22. The method of any one of the previous claims, wherein the substrate comprises one of: soil, rock, gravel and cement.

23. An artificial turf system, comprising:
the elastic layer manufactured according to any one of claims 1-22; and
an artificial turf (700) positioned directly on the elastic layer.

24. A method of manufacturing an artificial turf system on site, comprising:
manufacturing the elastic layer according to any one of claims 1-22, wherein the fluid elastic composite on the substrate solidifies into the elastic layer; and
before the fluid elastic composite solidifies, positioning an artificial turf (700) directly on the fluid elastic composite.

## Amended claims

### Amended claims in accordance with Rule 137(2) EPC.

1. A method of manufacturing an elastic layer on site, comprising:
downsizing (104) an aged artificial turf into artificial turf fragments;
processing (108) the artificial turf fragments for generating a plastic melt;
after the plastic melt solidifies, downsizing (110) the solidified plastic melt into plastic particles;
mixing (112) the plastic particles with a binding agent for forming a fluid elastic composite; and
applying (114) the fluid elastic composite on a substrate (630) at the site for forming the elastic layer (610).

2. The method of claim 1, wherein the artificial turf fragments comprise two or more plastic components, wherein at least two of the two or more plastic components comprise thermoplastic components, and wherein the plastic melt comprises a moldable mixture of the at least two thermoplastic components.

3. The method of claim 2, wherein processing the artificial turf fragments comprises rotationally mixing and transporting the artificial turf fragments for generating the plastic melt.

4. The method of claim 3, wherein rotationally mixing and transporting the artificial turf fragments further comprises rotationally mixing and transporting the artificial turf fragments at a pressure less than a maximum predefined pressure for generating the plastic melt.

5. The method of claim 4, wherein the maximum predefined pressure is between about 0.1 - 20 bar.

6. The method of any one of claims 4-5, wherein rotationally mixing and transporting the artificial turf fragments at the pressure less than the maximum predefined pressure further comprises rotationally mixing and transporting the artificial turf fragments at a predefined temperature, the predefined temperature based upon at least one melt temperature of the two or more thermoplastic components.

7. The method of any one of claims 4-6, wherein rotationally mixing and transporting the artificial turf fragments comprises rotationally mixing and transporting the artificial turf fragments in a chamber (202), the chamber having a proximate end (206), a distal end (208), at least one input port (210) positioned at the proximate end for receiving the artificial turf fragments, and at least one output port (212) positioned at the distal end through which the plastic melt flows, and wherein the transporting further comprises translationally transporting the artificial turf fragments toward the distal end of the chamber.

8. The method of claim 7, wherein the pressure in the chamber is created solely by translationally transporting the artificial turf fragments in the chamber.

9. The method of any one of claims 3-8, wherein the aged artificial turf comprises infill, and wherein the method further comprises:
separating the infill from the aged artificial turf before downsizing the aged artificial turf.

10. The method of claim 9, further comprising:
premixing the artificial turf fragments with a first fraction of the separated infill and optionally with a first portion of aged artificial turf fibers for forming a mixture, and wherein rotationally mixing and transporting the artificial turf fragments comprises rotationally mixing and transporting the mixture for generating the plastic melt; and/or
adding a second fraction of the separated infill and optionally a second portion of the aged artificial turf fibers to the mixing of the plastic particles with the binding agent for forming the fluid elastic composite.

11. The method of claim 10, wherein the mixture comprises up to 85 wt. % of the first fraction of the separated infill.

12. The method of claim 11, wherein the first and second fractions of the separated infill comprise at least one of a mineral infill and an elastomeric infill.

13. The method of claim 10, wherein the first and second fractions of the separated infill comprise sand and optionally an elastomeric infill, and wherein the mixture comprises up to 80 wt. % of the sand of the first fraction of the separated infill.

14. The method of claim 10, wherein the first and second fraction of the separated infill comprise sand, wherein the first and second fraction of the sand in combination represent 100% of the sand in the separated infill, and wherein the sand is contaminated by adhering microplastics resulting from usage of the aged artificial turf comprising the sand infill.

15. The method of claim 10, wherein premixing further comprises premixing the artificial turf fragments with the first fraction of the separated infill and optionally with the first portion of aged artificial turf fibers and with a polyethylene for forming the mixture, the mixture comprising polyethylene in an amount between 0.5 - 5 wt. %, preferably 2 wt. %.

16. The method of any one of claims 3-8, wherein the aged artificial turf comprises infill, wherein the plastic melt, generated from rotationally mixing and transporting the artificial turf fragments, comprises the infill, and wherein the infill comprises at least one of a mineral infill and an elastomeric infill.

17. The method of claim 16, further comprising:
premixing the artificial turf fragments with a first portion of aged artificial turf fibers for forming a mixture, and wherein rotationally mixing and transporting the artificial turf fragments comprises rotationally mixing and transporting the mixture for generating the plastic melt; and/or
adding a second portion of the aged artificial turf fibers to the mixing of the plastic particles with the binding agent for forming the fluid elastic composite.

18. The method of claim 17, wherein premixing further comprises premixing the artificial turf fragments with the first portion of aged artificial turf fibers and with a polyethylene for forming the mixture, the mixture comprising polyethylene in an amount between 0.5 - 5 wt. %, preferably 2 wt. %.

19. The method of any one of the previous claims, wherein applying the fluid elastic composite on the substrate at the site comprises pouring or spraying the fluid elastic composite on the substrate at the site for forming the elastic layer.

20. The method of any one of the previous claims, wherein the fragments of the aged artificial turf comprise one or more of: aged artificial turf fibers, downsized portions of artificial turf carrier layers, downsized portions of artificial turf backing layers and downsized portions of artificial turf elastic layers.

21. The method of claim 20, further comprising mowing the aged artificial turf for generating the aged artificial turf fibers.

22. The method of any one of the previous claims, wherein the substrate comprises one of: soil, rock, gravel and cement.

23. A method of manufacturing an artificial turf system on site, comprising:
manufacturing the elastic layer according to any one of claims 1-22, wherein the fluid elastic composite on the substrate solidifies into the elastic layer; and
before the fluid elastic composite solidifies, positioning an artificial turf (700) directly on the fluid elastic composite.
